# EUROPÄISCHE PATENTSCHRIFT

(11) **EP 2 339 191 B1**
(45) Veröffentlichungstag und Bekanntmachung des Hinweises auf die Patenterteilung: **26.09.2012**
(21) Anmeldenummer: 10196082.1
(22) Anmeldetag: 21.12.2010
(51) Int. Cl.: F16C 17/02, F16C 33/14, B21D 39/03

(54) **Gerolltes Gleitlagerelement und Flachmaterialabschnitt und Verfahren zu seiner Herstellung**
Rolled sliding bearing element, flat material section and method for its production
Elément de palier lisse enroulé et section en matériau plat ainsi que procédé destiné à sa fabrication

(30) Priorität: 23.12.2009 DE 102009060212
(43) Veröffentlichungstag der Anmeldung: 29.06.2011
(73) Patentinhaber: KS Gleitlager GmbH, 68789 St. Leon-Rot (DE)
(72) Erfinder: Baur, Wolfgang, 76698 Ubstadt-Weiher (DE)
(74) Vertreter: Dreiss

(56) Entgegenhaltungen:
- US-A- 578 801
- US-A- 2 855 252
- US-A1- 2006 185 751
- US-A1- 2006 257 058

## Beschreibung

Die Erfindung betrifft einen Flachmaterialabschnitt für die Herstellung eines buchsenförmigen gerollten metallischen Gleitlagerelements mit einer Stoßfuge, insbesondere Gleitlagerbuchse oder Gleitlagerbundbuchse, in einem Biegerollprozess, mit den Merkmalen des Oberbegriffs des Anspruchs 1. Ein derartiger Flachmaterialabschnitt mit den strukturellen Merkmalen des Oberbegriffs des Anspruch 1 ist aus einem Ausführungsbeispiel der US 2006/0185751 A1 bekannt. Ferner betrifft die Erfindung ein solches gerolltes metallisches Gleitlagerelement und ein Verfahren zum Herstellen eines solchen gerollten metallischen Gleitlagerelements.

Ein vorstehend erwähnter bekannter Flachmaterialabschnitt ist typischerweise ausgehend von einem endlosen metallischen Flachmaterial als rechteckförmiger oder trapezförmiger Abschnitt ausgestanzt. Er wird wie erwähnt in einem Biegerollprozess dann auf die Form des gerollten Gleitlagerelements mit Stoßfuge gebracht. Vorbekannte Flachmaterialabschnitte und Gleitlagerelemente haben typischerweise zwei zungenförmige Vorsprünge am einen Ende, die in zwei Ausnehmungen am anderen Ende des Flachmaterialabschnitts eingreifen, wenn der Flachmaterialabschnitt auf Buchsenform gerollt ist. Diese zungenförmigen Vorsprünge sind typischerweise am Flachmaterialabschnitt vor dem Rollen auf 360° Buchsenform hintergriffsfrei ausgebildet, wie z.B. US 2,855,252 B zeigt. Beim Biegerollprozess werden sie dann in der Tangentialebene und relativ zur Umfangsrichtung gebogen, damit ein in Umfangsrichtung formschlüssig wirkender Hintergriff erzeugt wird, wodurch das gerollte Gleitlagerelement mit auf Stoß gegeneinander anliegenden Stirnseiten der Enden des gerollten Flachmaterialabschnitts, also mit einem geschlossenen Stoßbereich erhalten wird. Beim Verformen des betreffenden Vorsprungs werden auf einer Seite des Vorsprungs naturgemäß Zugspannungen erzeugt, die sich als höchst kritisch erweisen können. Es besteht die Gefahr, dass es hier zu Rissen in dem Material kommt, insbesondere wenn bei dem Gleitelement eine Lagerwerkstoffbeschichtung (Laufschicht) aus einem verschleißbeständigen, weniger duktilen und daher eher spröden Material verwendet wird. Wenn es aber zu Ausbrüchen in der Laufschicht des Gleitlagerelements kommt, so bedeutet dies den Ausfall bzw. die Nichtverwendbarkeit des Gleitlagerelements. Man ist dem vorstehend geschilderten Problem seither dadurch begegnet, dass man hier nur duktile Lagerwerkstoffe bzw. Lagerwerkstoffbeschichtungen zur Bildung der Laufschicht des Flachmaterials eingesetzt hat. Für eher spröde wirkende Lagerwerkstoffe ist ein wie vorausgehend beschrieben ausgebildeter Stoßbereich nicht herstellbar.

Bei US-A-4,909,638 werden zwar nur zwei 180° erfassende Lagerhalbschalen mit zungenförmigen Vorsprüngen und Ausnehmungen als Axialverschiebungssicherung gegeneinander gelegt. Bei einer Ausführungsform werden jedoch zungenförmige Vorsprünge gebogen, so dass es in Folge der dabei auftretenden Zugspannungen gerade zu den vorstehende geschilderten Problemen kommen kann.

Der vorliegenden Erfindung liegt hiervon ausgehend die Aufgabe zugrunde, den vorstehend geschilderten Problemen zu begegnen, dahingehend, dass auch weniger duktile Lagerwerkstoffe verwendet werden können.

Diese Aufgabe wird erfindungsgemäß gelöst durch einen Flachmaterialabschnitt mit den Merkmalen des Anspruchs 1.

Es wird also erfindungsgemäß vorgeschlagen, beim Gegeneinanderdrücken der Enden des Flachmaterialabschnitts, also von Vorsprung und Ausnehmung, im Zuge des Biegerollprozesses den Vorsprung nicht lediglich in der Tangentialebene relativ zur Umfangsrichtung zu biegen, wodurch auf einer Seite Druckspannungen und auf der anderen Seite die gefährlichen Zugspannungen erzeugt werden, sondern es wird erfindungsgemäß vorgeschlagen, den Vorsprung und die Ausnehmung so auszubilden, dass beim Gegeneinanderdrücken die hierbei auftretenden Zugspannungen kompensiert werden durch Druckspannungen, die durch eine stauchende Verformung des Materials des Vorsprungs erzeugt werden. Im Ergebnis können so die Zugspannungen innerhalb des Vorsprungs und angrenzender Bereiche des Flachmaterialabschnitts auf ein solches Maß beschränkt werden, dass eine rissfreie Verklammerung oder Verclinchung des Stoßbereichs des Gleitlagerelements erzielbar ist.

Weiter erfindungsgemäß wird vorgeschlagen, dass der Vorsprung ausgehend vom platinenartigen Flachmaterialabschnitt einen verjüngten Halsabschnitt und den verdickten Kopf aufweist und der Halsabschnitt auf der nicht auf Zug beanspruchten Seite eine Flanke aufweist, die zur Umfangsrichtung auf die auf Zug beanspruchte Seite hin geneigt ist. Insbesondere ist die genannte Flanke um 10°-20°, insbesondere um 12° - 18° zur Umfangsrichtung geneigt. Auf diese Weise wird die Materialverformung beim Stauchen in Richtung auf die auf Zug beanspruchte Seite hin geleitet, so dass dort eine Kompensation von Zugspannungen durch Druckspannungen noch besser unterstützt wird.

Weiter erfindungsgemäß ist der Flachmaterialabschnitt so ausgebildet, dass am vorsprungsseitigen Ende zwischen den zwei Vorsprüngen ein erster Flankenabschnitt ausgebildet ist, der in Umfangsrichtung vor zwei äußeren zweiten Flankenabschnitten vorgelagert ist und der insbesondere im wesentlichen quer zur Umfangsrichtung des Gleitlagerelements verläuft.

Des weiteren ist der Flachmaterialabschnitt vorteilhafter Weise so ausgebildet, dass am ausnehmungsseitigen Ende zwischen den zwei Ausnehmungen ein erster Flankenabschnitt ausgebildet ist, der in Umfangsrichtung hinter zwei äußeren zweiten Flankenabschnitten zurückgesetzt ist und der insbesondere im wesentlichen quer zur Umfangsrichtung des Gleitlagerelements verläuft. - Bei dieser Ausbildung liegen die Enden des Flachmaterialabschnitts im gerollten Zustand des Gleitlagerelements gegeneinander an, wobei zwei Ebenen im Stoßbereich gebildet sind, welche die Stabilität des Stoßbereichs weiter erhöhen.

In vorteilhafter Ausbildung dieses Erfindungsgedankens sind der erste Flankenabschnitt und die zweiten Flankenabschnitte um 0,5 - 1,0 mm, insbesondere 0,6 - 0,9 mm in Umfangsrichtung zueinander versetzt.

Bei einer vorteilhaften Gestaltung der Enden des Flachmaterialabschnitts erweist es sich als vorteilhaft, wenn der Vorsprung und die Ausnehmung wenigstens abschnittsweise durch Bereiche mit einem Krümmungsradius zwischen 0,4 und 1,0 mm begrenzt werden.

Weiter erweist es sich als vorteilhaft, wenn die Ausnehmung einen Halsabschnitt und einen Kopfabschnitt aufweist und dass der Halsabschnitt auf der einen Seite eine Flanke aufweist, die im wesentlichen in Umfangsrichtung erstreckt ist. Auch hierdurch wird eine Stabilisierung im Zuge des gegeneinander Drückens von Vorsprung und Ausnehmung dahingehend erreicht, dass die vorgegebene Geometrie der Ausnehmung im Zuge des Gegeneinanderdrückens im wesentlichen erhalten bleibt. Es erweist sich bei einer gestuften Ausbildung des Stoßbereichs, wie vorausgehend beschrieben, weiter als vorteilhaft, wenn die Länge der im wesentlichen in Umfangsrichtung erstreckten Flanke des Halsabschnitts der Ausnehmung in Umfangsrichtung geringer ist als der Abstand zwischen dem quer zur Umfangsrichtung verlaufenden ersten Flankenabschnitt und dem zweiten Flankenabschnitt. Auch hierdurch kann eine weitere Stabilisierung realisiert werden.

Gegenstand der Erfindung ist auch ein gerolltes metallisches Gleitlagerelement mit den Merkmalen der Ansprüche 8-10. Bei einem derartigen erfindungsgemäßen Gleitlagerelement sind die im Bereich des Vorsprungs oder der Vorsprünge im Zuge des Biegens zur Erzeugung eines verclinchten Stoßbereichs auftretenden Zugspannungen gegenüber bekannten Gleitlagerelementen erheblich reduziert, weshalb große Freiheit in der Wahl des Gleitlagerwerkstoffs bzw. der Gleitlagerwerkstoffbeschichtung eines Trägermaterials, insbesondere aus Stahl (sogenannter Stahlrücken) besteht.

Weiter erweist es sich als vorteilhaft, wenn die betreffende Ausnehmung einen Halsabschnitt und einen Kopfabschnitt aufweist, und der Halsabschnitt auf der einen Seite eine Flanke aufweist, die im wesentlichen in Umfangsrichtung erstreckt ist.

Gegenstand der Erfindung ist aber auch ein Verfahren zum Herstellen eines gerollten metallischen Gleitlagerelements mit einer Stoßfuge mit den Merkmalen des Anspruchs 11.

Weitere Merkmale, Einzelheiten und Vorteile der Erfindung ergeben sich aus den beigefügten Patentansprüchen und aus der zeichnerischen Darstellung und nachfolgenden Beschreibung einer bevorzugten Ausführungsform der Erfindung. In der Zeichnung zeigt:
- Figur 1: einen platinenförmigen Flachmaterialabschnitt zur Herstellung einer gerollten Gleitlagerbuchse im ebenen, noch nicht gerollten Zustand;
- Figur 2: eine übereinander gelegte bzw. übereinander projizierte Darstellung der Enden des Flachmaterialabschnitts im unverformten Ausgangszustand;
- Figur 3: eine Draufsicht auf die einander zugewandten Enden des Flachmaterialabschnitts;
- Figur 4: eine Darstellung der Enden des Flachmaterialabschnitts im Zuge des BiegerollVorgangs unmittelbar vor Beginn der Verformung;
- Figur 5: eine Darstellung des Stoßbereichs des gerollten fertigen Gleitlagerelements;
- Figur 6: eine perspektivische Ansicht eines erfindungsgemäßen gerollten Gleitlagerelements.

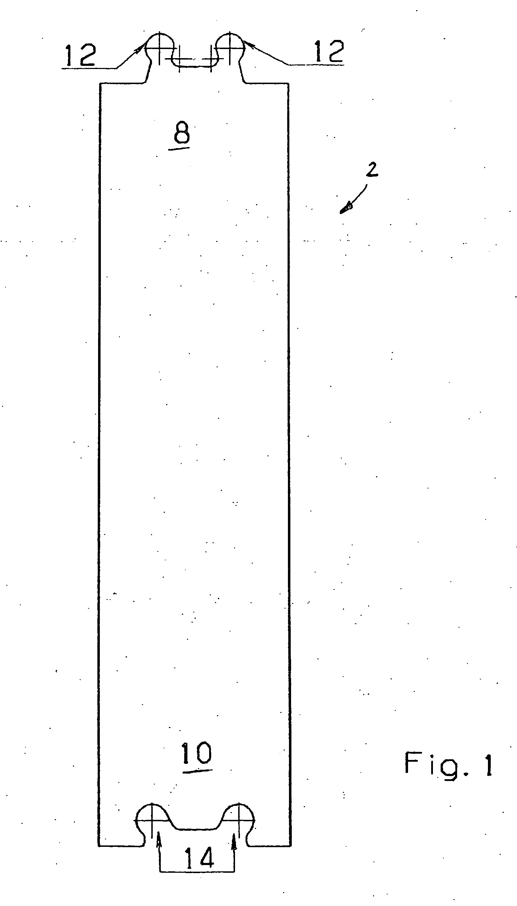

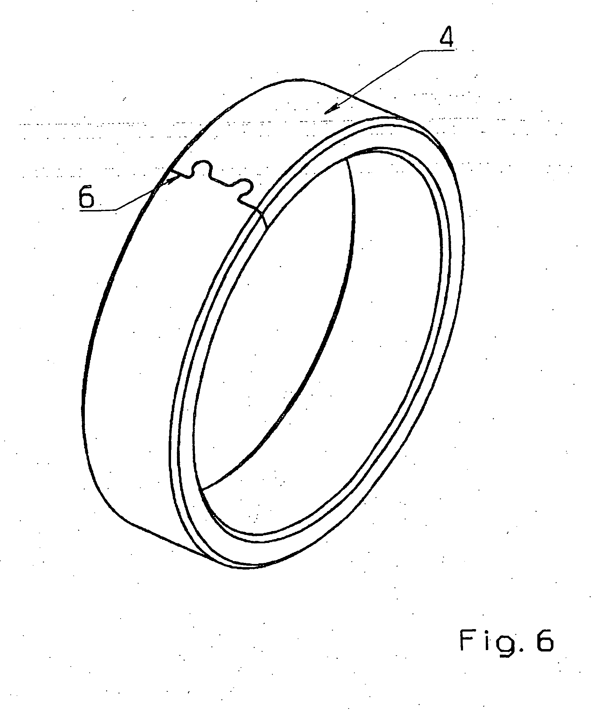

Figur 1 zeigt eine Draufsicht auf einen Flachmaterialabschnitt 2 für die Herstellung eines gerollten metallischen Gleitlagerelements 4 mit Stoßfuge 6, wie es in Figur 6 dargestellt ist. Bei dem Flachmaterialabschnitt 2 handelt es sich in bevorzugter Weise um ein Gleitlagerverbundmaterial mit einer Trägerschicht aus vorzugsweise Stahl und einer dem Gleitpartner zugewandten, also im fertigen Gleitlagerelement radial innen angeordneten Gleitschicht aus einem Gleitlagermaterial, typischerweise eine Kupferlegierung oder eine Kunststoffgleitmischung, insbesondere auf PEEK-, PES-, PAI oder PI-Basis.

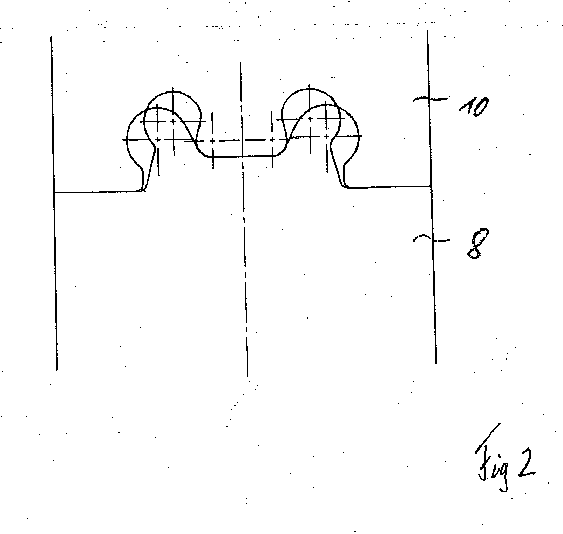

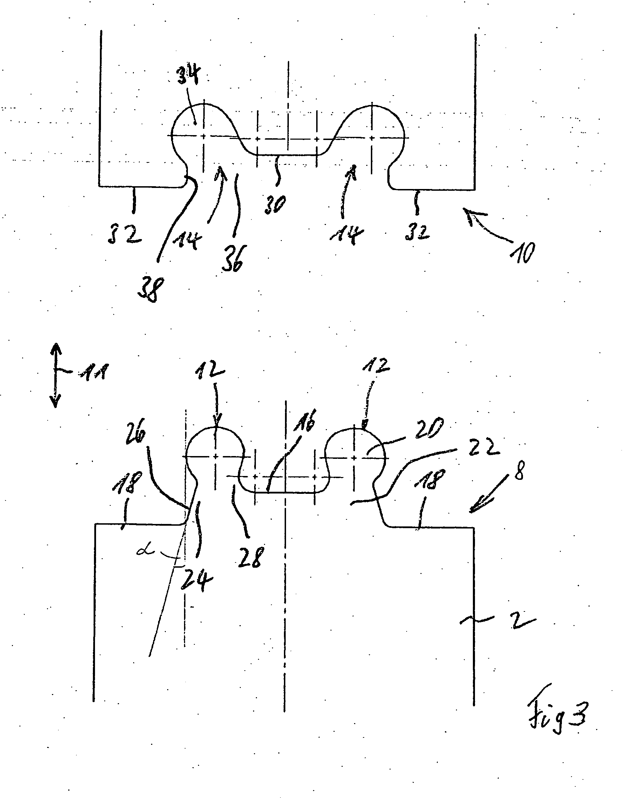

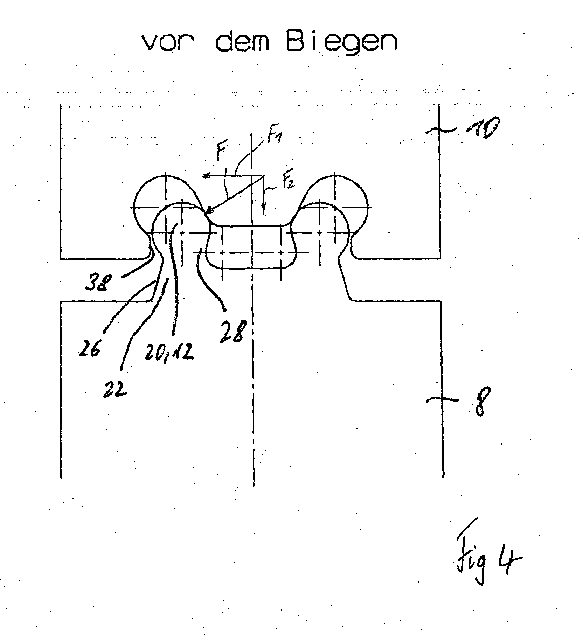

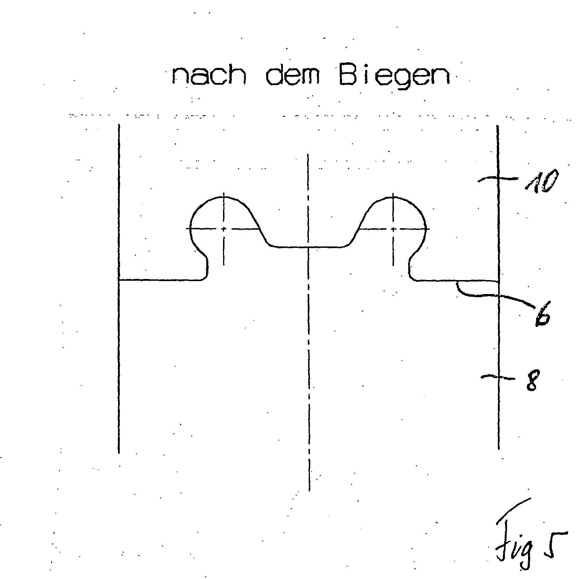

Zur Herstellung des Gleitlagerelements 6 wird der Flachmaterialabschnitt 2, der zuvor vorzugsweise aus einem endlosen Flachmaterial ausgestanzt wurde, einem Biegerollprozess zugeführt, im Zuge dessen die freien Enden 8 und 10 des Flachmaterialabschnitts 2 in Umfangsrichtung 11 (Figur 6) gegeneinander gedrückt werden. Am freien Ende 8 sind im beispielhaft dargestellten Fall zwei Vorsprünge 12 und am freien Ende 10 zwei hierzu nur ungefähr komplementär ausgebildete Ausnehmungen 14 vorgesehen, die im Zuge des Gegeneinanderdrückens der Enden 8, 10 miteinander in Eingriff gelangen, mit dem Ziel, eine dauerhaft geschlossene Stoßfuge 6 bei dem Gleitlagerelement 4 auszubilden. Erfindungsgemäß sind die Vorsprünge 12 und die Ausnehmungen 14 nun so ausgebildet, dass es im Zuge der Verformung der Vorsprünge 12 nicht oder in sehr viel geringerem Maße zur Ausbildung von Zugspannungen an der typischen auf Zug beanspruchten Seite oder Flanke des betreffenden Vorsprungs kommt. Figur 3 zeigt in der Draufsicht die Enden 8 und 10 des Flachmaterialabschnitts 2 in einander zugewandter Darstellung und Figur 2 zeigt die Enden 8, 10 in übereinander gelegter Projektion. Die Figuren 4 und 5 zeigen den Zustand unmittelbar vor Beginn der Verformung bzw. nach Vollendung der Verformung mit geschlossener Stoßfuge 6.

Wie am besten aus Figur 3 ersichtlich ist, ist am vorsprungseitigen Ende 8 des Flachmaterialabschnitts zwischen den zwei Vorsprüngen 12 ein erster Flankenabschnitt 16 ausgebildet, der in Umfangsrichtung 11 vor zwei äußeren zweiten Flankenabschnitten 18 vorgelagert ist. Die Flankenabschnitte 16, 18 verlaufen vorzugsweise rechtwinklig zur Längserstreckung des Flachmaterialabschnitts 2 bzw. zur Umfangsrichtung 11. Der erste Flankenabschnitt 16 und die zwei äußeren zweiten Flankenabschnitte 18 gehen jeweils in einen Vorsprung 12 über. Die beiden Vorsprünge 12 haben einen verdickten Kopf 20 und einen Halsabschnitt 22, welcher in die Flankenabschnitte 16, 18 übergeht. Auf der nicht auf Zug beanspruchten äußeren Seite 24 wird der jeweilige Halsabschnitt 22 von einer Flanke 26 begrenzt, die zur Umfangsrichtung 11 geneigt ist und zwar in Richtung auf die auf Zug beanspruchte Seite 28. Der Neigungswinkel α beträgt im bevorzugt und beispielhaft dargestellten Fall ca. 15°. Hierdurch wird der Vorsprung beim Gegeneinanderdrücken gestützt. Es wird auf diese Weise wie nachfolgend noch erläutert wird, eine verdrängende, das heißt, stauchende Verformung des verdickten Kopfs 20 und des Vorsprungs 12 herbeigeführt, wodurch Zugspannungen auf der eher auf Zug beanspruchten Seite 28 des Vorsprungs kompensiert werden. Im beispielhaft und bevorzugt dargestellten Fall sind die Vorsprünge 12 und die Ausnehmungen 14 nämlich derart ausgebildet, dass beim Gegeneinanderdrücken der Enden 8, 10 die Vorsprünge 12 voneinander weg, also nach außen gebogen werden, wodurch sich die generelle Zugbeanspruchung auf der jeweils inneren Seite 28 der Vorsprünge 12 ergibt, die jedoch auf die erfindungsgemäße Weise ausgeglichen werden.

Wie sich ebenfalls aus Figur 3 ergibt, ist am ausnehmungsseitigen Ende 10 des Flachmaterialabschnitts 2 ein erster Flankenabschnitt 30 in Umfangsrichtung 11 hinter zwei äußere zweite Flankenabschnitte 32 zurückgesetzt. Die betreffenden ersten Flankenabschnitte 16, 30 und die zweiten Flankenabschnitte 18, 32 liegen im fertigen Zustand des Gleitlagerelements gegeneinander an. Daher ist auch der Abstand zwischen den ersten und zweiten Flankenabschnitten beim vorsprungseitigen Ende 8 und beim ausnehmungsseitigen Ende 10 gleich.

Auch die Ausnehmungen 14 haben einen Kopfbereich 34 und einen Halsabschnitt 36, wobei der Halsabschnitt 36 auf der einen äußeren Seite eine Flanke 38 aufweist, die in Umfangsrichtung 11 erstreckt ist. Sie hat im Zuge des Gegeneinanderdrückens von Vorsprung 12 und Ausnehmung 14 eine stützende Funktion.

Figur 4 zeigt den Zustand unmittelbar zu Beginn des Gegeneinanderdrückens der Enden 8, 10. Man erkennt, dass beim Weiterdrücken eine Kraft F auf den Kopf 20 des Vorsprungs 12 ausgeübt wird, welche den Vorsprung in der Tangentialebene des Gleitlagerelements (= Zeichnungsebene der Figur 4) nach außen zu drücken sucht. Hierbei entstehen grundsätzlich Zugspannungen auf der Innenseite 28. Dadurch, dass der Kopf 20 im nächsten Moment gegen den Übergang der Flanke 38 zum Kopf 34 der Ausnehmung 14 anläuft, entsteht aber eine stützende Wirkung, das heißt, ein Gegenlager, wodurch beim weiteren Zusammendrücken eine stauchende Verformung des Vorsprungs 12 eingeleitet wird. Hierbei erweist sich die vorausgehend beschriebene Neigung der Flanke 26, welche den Halsabschnitt 22 des Vorsprungs 12 begrenzt, ebenfalls als vorteilhaft. Beim weiteren Gegeneinanderdrücken wird also der Vorsprung nicht nur gebogen, sondern verdrängend verformt, wobei Material in Richtung auf die auf Zug beanspruchte Seite 28 des Vorsprungs 12 geleitet wird und dort entstehende Zugspannungen kompensiert. Die eingezeichnete Kraft F lässt sich also schematisch zerlegen in eine biegende Komponente F1 und eine stauchende Komponente F2, welch letztere die naturgemäß auftretenden Zugspannungen auf der auf Zug beanspruchten Seite 28 des Vorsprungs ausgleicht. Nach der Beendigung des Biegerollvorgangs haben die Vorsprünge 12 schließlich die Form der Ausnehmungen 14 angenommen und die Stoßfuge 6 ist geschlossen. Erfindungsgemäß sind keine Einrisse auch bei Verwendung etwas weniger duktiler Gleitlagerwerkstoffe festzustellen.

## Patentansprüche

1. Flachmaterialabschnitt (2) für die Herstellung eines buchsenförmigen gerollten metallischen Gleitlagerelements (4) oder Metall/Kunststoffverbundgleitlagerelements (4) mit einer Stoßfuge (6), insbesondere Gleitlagerbuchse oder Gleitlagerbundbuchse, in einem Biegerollprozess, wobei die an der Stoßfuge (6) aneinander anliegenden Enden (8, 10) des gerollten Flachmaterialabschnitts (2) über einen Vorsprung (12) an dem einen Ende (8) und eine Ausnehmung (14) an dem anderen Ende (10) miteinander in Eingriff sind, wobei der Vorsprung (12) und die Ausnehmung (14) im Zuge des Biegerollprozesses gegeneinander gedrückt werden und so miteinander in Eingriff gelangen, wobei der Vorsprung (12) hierbei relativ zur Umfangsrichtung (11) des Gleitlagerelements (4) gebogen wird, wobei der Vorsprung (12) und die Ausnehmung (14) ausgehend vom platinenartigen Flachmaterialabschnitt (2) derart ausgebildet sind, dass den in Folge des Gegeneinanderdrückens von Vorsprung (12) und Ausnehmung (14) auftretenden Zugspannungen auf der auf Zug beanspruchten Seite (28) des Vorsprungs (12) entgegengewirkt wird durch eine stauchende Verformung des Vorsprungs (12), indem der Vorsprung (12) einen verdickten Kopf (20) aufweist, der beim Gegeneinanderdrücken von Vorsprung (12) und Ausnehmung (14) nicht ohne Stauchung in die Ausnehmung (14) einrückbar ist, so dass der Vorsprung (12) beim Gegeneinanderdrücken von Vorsprung (12) und Ausnehmung (14) auf der nicht auf Zug beanspruchten Seite (24) des Vorsprungs (12) gestützt ist und so der Stauchvorgang provoziert wird, wobei am jeweiligen Ende (8, 10) im Stoßbereich zwei Vorsprünge (12) bzw. zwei Ausnehmungen (14) ausgebildet sind und die Ausnehmungen (14) derart vorgesehen sind, dass die Vorsprünge (12) voneinander weggebogen werden, **dadurch gekennzeichnet, dass** am vorsprungsseitigen Ende (8) zwischen den zwei Vorsprüngen (12) ein erster Flankenabschnitt (16) ausgebildet ist, der in Umfangsrichtung (11) vor zwei äußeren zweiten Flankenabschnitten (18) vorgelagert ist und der insbesondere im wesentlichen quer zur Umfangsrichtung (11) des Gleitlagerelements (4) verläuft, und dass der Vorsprung (12) ausgehend vom platinenartigen Flachmaterialabschnitt (2) einen verjüngten Halsabschnitt (22) und den verdickten Kopf (20) aufweist und der Halsabschnitt (22) auf der nicht auf Zug beanspruchten Seite (24) eine Flanke (26) aufweist, die zur Umfangsrichtung (11) zu der auf Zug beanspruchten Seite hin geneigt ist.

2. Flachmaterialabschnitt nach Anspruch 1, **dadurch gekennzeichnet, dass** am ausnehmungsseitigen Ende (10) zwischen den zwei Ausnehmungen (14) ein erster Flankenabschnitt (30) ausgebildet ist, der in Umfangsrichtung (11) hinter zwei äußeren zweiten Flankenabschnitten (32) zurückgesetzt ist und der insbesondere im wesentlichen quer zur Umfangsrichtung (11) des Gleitlagerelements (4) verläuft.

3. Flachmaterialabschnitt nachAnspruch 1 oder 2, **dadurch gekennzeichnet, dass** der erste Flankenabschnitt (16, 30) und die zweiten Flankenabschnitte (18, 32) um 0,5 - 1,0 mm, insbesondere 0,6 - 0,9 mm in Umfangsrichtung (11) zueinander versetzt sind.

4. Flachmaterialabschnitt nach Anspruch 1, 2 oder 3, dadurch gekenntzeichnet, dass die Flanke (26) um 5 - 25°, insbesondere 10 - 20°, insbesondere 12 - 18° zur Umfangsrichtung (11) geneigt ist.

5. Flachmaterialabschnitt nach einem der vorstehenden Ansprüche, **dadurch gekennzeichnet, dass** der Vorsprung (12) und die Ausnehmung (14) abschnittsweise einen Krümmungsradius zwischen 0,4 und 1,0 mm aufweisen.

6. Flachmaterialabschnitt nach einem der vorstehenden Ansprüche, **dadurch gekennzeichnet, dass** die Ausnehmung (14) einen Halsabschnitt (36) und einen Kopfabschnitt (34) aufweist und dass der Halsabschnitt (36) auf der einen Seite eine Flanke (38) aufweist, die im wesentlichen in Umfangsrichtung (11) erstreckt ist.

7. Flachmaterialabschnitt nach Anspruch 6, **dadurch gekennzeichnet, dass** die Länge der Flanke (38) des Halsabschnitts (36) der Ausnehmung (14) in Umfangsrichtung (11) geringer ist als der Abstand zwischen dem quer zur Umfangsrichtung (11) verlaufenden ersten Flankenabschnitt (30) und dem zweiten Flankenabschnitt (32).

8. Gerolltes metallisches Gleitlageslement, insbesondere eine Gleitlagerbuchse oder Gleitlagerbundbuchse (4) mit einer Stoßfuge (6), die ausgehend von einem platinenförmigen Flachmaterialabschnitt (2) nach einem oder mehreren der vorstehenden Ansprüche in einem Biegerollprozess erhalten wurde, wobei die an der Stoßfuge (6) aneinander anliegenden Enden (8, 10) des gerollten Flachmaterialabschnitts (2) über einen Vorsprung (12) an dem einen Ende (8) und eine Ausnehmung (14) an dem anderen Ende (10) miteinander in Eingriff sind, wobei der Vorsprung (12) und die Ausnehmung (14) im Zuge des Biegerollprozesses gegeneinander gedrückt werden und so miteinander in Eingriff gelangen, wobei der Vorsprung (12) hierbei relativ zur Umfangsrichtung (11) des Gleitlagerelements (4) gebogen wird, wobei am vorsprungsseitigen Ende (8) zwischen den zwei Vorsprüngen (12) ein erster Flankenabschnitt (16) ausgebildet ist, der in Umfangsrichtung (11) vor zwei äußeren zweiten Flankenabschnitten (18) vorgelagert oder hinter zwei äußeren zweiten Flankenabschnitten (32) zurückgesetzt ist und der insbesondere im wesentlichen quer zur Umfangsrichtung (11) des Gleitlagerelements (4) verläuft.

9. Gerolltes metallisches Gleitlagerelement (4) nach Anspruch 8, **dadurch gekennzeichnet, dass** der erste Flankenabschnitt (16, 30) und die zweiten Flankenabschnitte (18, 32) um 0,5 - 1,0 mm, insbesondere 0,6 -0,9 mm in Umfangsrichtung (11) zueinander versetzt sind

10. Gerolltes metallisches Gleitlagerelement (4) nach einem der Ansprüche 8 und 9, **dadurch gekennzeichnet, dass** die Ausnehmung einen Halsabschnitt (36) und einen Kopfabschnitt (34) aufweist und dass der Halsabschnitt (36) auf der einen Seite eine Flanke (38) aufweist, die im wesentlichen in Umfangsrichtung (11) erstreckt ist.

11. Verfahren zum Herstellen eines gerollten metallischen Gleitlagerelements (4) mit einer Stoßfuge (6) nach einem der Ansprüche 8,9 und 10 in einem Biegerollprozess, unter Verwendung eines Flachmaterialabschnitts (2) nach einem oder mehreren der Ansprüche 1-7, wobei die Enden des Flachmaterialabschnitts (2) in Umfangsrichtung (11) gegeneinander gedrückt werden, so dass der Vorsprung (12) in Eingriff mit der Ausnehmung (14) gebracht wird, **dadurch gekennzeichnet, dass** beim Gegeneinanderdrücken der Enden (8, 10) auf den verdickten Kopf (20) des Vorsprungs (12) eine biegende und eine stauchende Kraft ausgeübt wird und der Kopf (20) dabei auf der nicht auf Zug beanspruchten Seite (24) gestützt wird und so der Stauchvorgang provoziert wird.

## Claims

1. Flat material section (2) for manufacturing a bushing-shaped, rolled, metallic plain bearing element (4) or metal / plastic composite plain bearing element (4) with a butt joint (6), in particular plain bearing bushing or plain bearing composite bushing, in a roll bending process, whereby the ends (8, 10) of the rolled flat material section (2) abutting each other at the butt joint (6) are engaged with each other by means of a projection (12) at the one end (8) and a recess (14) at the other end (10), whereby the projection (12) and the recess (14) are pressed together during the course of the roll bending process and thus engage with each other whereby the projection (12) is bent hereby relative to the circumferential direction (11) of the plain bearing element (4), whereby the projection (12) and the recess (14) are formed from the plate-like, flat material section (2) in such a manner that the tensile stresses arising as a result of the projection (12) and the recess (14) being pressed against each other are counteracted on the side (28) of the projection (12) under tension by a clinching deformation of the projection (12), in which the projection (12) has a thickened head (20) which is not insertable without clinching into the recess (14) as the projection (12) and the recess (14) are pressed against each other, so that the projection (12) is supported on the side (24) of the projection (12) not under tensile stress as the projection (12) and the recess (14) are pressed against each other and, thus, the clinching process is instigated whereby, at each end (8, 10), respectively, two projections (12) or, in the other case, two recesses (14) are formed in the butt joint region and the recesses (14) are provided such that the projections (12) are bent away from each other, **characterised in that**, at the projection end (8) and between the two projections (12), a first flank section (16) is formed which is located forward of two outer flank sections (18) in the circumferential direction (11) and which runs in particular essentially transverse to the circumferential direction (11) of the plain bearing element (4), and that the projection (12) has a tapered neck section (22) and the thickened head (20) extending from the plate-like, flat material section (2) and the neck section (22), on its side (24) not under tensile stress, has a flank (26) which is inclined in the circumferential direction (11) towards the side under tensile stress.

2. Flat material section according to claim 1, **characterised in that**, at the recess end (10) and between the two recesses (14), a first flank section (30) is formed which is set back from two outer flank sections (32) in the circumferential direction (11) and which runs in particular essentially transverse to the circumferential direction (11) of the plain bearing element (4).

3. Flat material section according to claim 1 or 2, **characterised in that** the first flank section (16, 30) and the second flank sections (18, 32) are separated from each other by 0.5 - 1.0 mm, in particular 0.6 - 0.9 mm in the circumferential direction (11).

4. Flat material section according to claim 1, 2 or 3, **characterised in that** the flank (26) is inclined at 5 - 25°, in particular 10 - 20°, in particular 12 - 18° to the circumferential direction (11).

5. Flat material section according to one of the foregoing claims, **characterised in that** the projection (12) and the recess (14) have a curvature radius between 0.4 and 1.0 mm in section.

6. Flat material section according to one of the foregoing claims, **characterised in that** the recess (14) has a neck section (36) and a head section (34) and that the neck section (36) has a flank (38) on the one side which is extended essentially in the circumferential direction (11).

7. Flat material section according to claim 6, **characterised in that** the length of the flank (38) of the neck section (36) of the recess (14) is less in the circumferential direction (11) than the gap between the first flank section (30), running transverse to the circumferential direction (11), and the second flank section (32).

8. Rolled metallic plain bearing element, in particular a plain bearing bushing or plain bearing composite bushing (4) with a butt joint (6) which is obtained from a plate-shaped, flat material section (2) according to one or more of the foregoing claims in a roll bending process, whereby the ends (8, 10) of the rolled flat material section (2) abutting each other at the butt joint (6) are engaged with each other by means of a projection (12) at the one end (8) and a recess (14) at the other end (10), whereby the projection (12) and the recess (14) are pressed together during the course of the roll bending process and thus engage with each other whereby the projection (12) is bent hereby relative to the circumferential direction (11) of the plain bearing element (4), whereby at the projection end (8) and between the two projections (12), a first flank section (16) is formed which is located forward of two outer flank sections (18) in the circumferential direction (11) or is set back behind two outer flank sections (32) and which in particular runs essentially transverse to the circumferential direction (11) of the plain bearing element (4).

9. Rolled metallic plain bearing element (4) according to claim 8, **characterised in that** the first flank section (16, 30) and the second flank sections (18, 32) are separated from each other by 0.5 - 1.0 mm, in particular 0.6 - 0.9 mm in the circumferential direction (11).

10. Rolled metallic plain bearing element (4) according to one of the claims 8 and 9, **characterised in that** the recess has a neck section (36) and a head section (34) and that the neck section (36) has a flank (38) on the one side which is extended essentially in the circumferential direction (11).

11. Method of manufacturing a rolled metallic plain bearing element (4) with a butt joint (6) according to one of the claims 8, 9 and 10 in a roll bending process using a flat material section (2) according to one or more of the claims 1 - 7, whereby the ends of the flat material section (2) are pressed against each other in the circumferential direction (11) so that the projection (12) is brought into engagement with the recess (14), **characterised in that**, as the ends (8, 10) are pressed against each other, a bending and clinching force is applied to the thickened head (20) of the projection (12) and, in doing so, the head (20) is supported on the side (24) not under tensile stress, thus instigating the clinching process.

## Revendications

1. Section de matériau plat (2) pour la fabrication d'un élément de palier lisse métallique (4) ou élément de palier lisse composite métalloplastique (4) enroulé en forme de coussinet avec un joint bord à bord (6), notamment coussinet lisse ou coussinet lisse à collerette, par une opération de cintrage-roulage, les extrémités (8, 10) adjacentes au niveau du joint bord à bord (6) de la section de matériau plat (2) enroulée étant mises en prise au moyen d'une partie en saillie (12) située à une extrémité (8) et d'un évidement (14) situé à l'autre extrémité (10), la partie en saillie (12) et l'évidement (14) étant pressés l'un contre l'autre au cours de l'opération de roulage-cintrage et ainsi mis en prise, la partie en saillie (12) étant alors recourbée par rapport à la direction périphérique (11) de l'élément de palier lisse (4), la partie en saillie (12) et l'évidemment (14) étant conçus à partir de la section de matériau plat (2) en forme de platine de telle manière que les contraintes de tension induites sur le côté sollicité en traction (28) de la partie en saillie (12) par le placage de la partie en saillie (12) contre l'évidement (14) sont contrées par déformation par refoulement de la partie en saillie (12) grâce au fait que la partie en saillie (12) présente une tête épaissie (20) qui, lorsque l'on presse la partie en saillie (12) et l'évidement (14) l'un contre l'autre, ne peut pas être enfoncée dans l'évidement (14) sans refoulement, de sorte que la partie en saillie (12) coopère en appui du côté non sollicité en traction (24) de la partie en saillie (12) lorsque la partie en saillie (12) et l'évidement (14) sont pressés l'un contre l'autre, ce qui provoque le processus de refoulement, deux parties en saillie (12) et deux évidements (14) étant respectivement formés à chaque extrémité (8, 10) dans la zone de jointure et les évidements (14) étant prévus de manière à ce que les parties en saillie (12) soient recourbées dans des directions opposées, **caractérisée en ce qu'**à l'extrémité côté saillie (8), une première portion de flanc (16) est formée entre les deux parties en saillie (12), laquelle première portion de flanc est décalée vers l'avant dans la direction périphérique (11) par rapport à deux deuxièmes portions de flanc extérieures (18) et s'étend en particulier sensiblement transversalement à la direction périphérique (11) de l'élément de palier lisse (4), **en ce que** la partie en saillie (12) présente, à partir de la section de matériau plat (2) en forme de platine, un col aminci (22) et la tête épaissie (20), et **en ce que** le col (22) présente sur le côté non sollicité en traction (24) un flanc (26) qui est incliné par rapport à la direction périphérique (11) en direction du côté sollicité en traction.

2. Section de matériau plat selon la revendication 1, **caractérisée en ce qu'**à l'extrémité côté évidement (10), une première portion de flanc (30) est formée entre les deux évidements (14), laquelle portion de flanc est décalée vers l'arrière dans la direction périphérique (11) par rapport à deux deuxièmes portions de flanc extérieures (32) et s'étend en particulier sensiblement transversalement à la direction périphérique (11) de l'élément de palier lisse (4).

3. Section de matériau plat selon la revendication 1 ou la revendication 2, **caractérisée en ce que** la première portion de flanc (16, 30) et les deuxièmes portions de flanc (18, 32) sont décalées l'une par rapport aux autres dans la direction périphérique (11) de 0,5 à 1,0 mm, notamment de 0,6 à 0,9 mm.

4. Section de matériau plat selon la revendication 1, 2 ou 3, **caractérisée en ce que** le flanc (26) est incliné de 5 à 25° , notamment de 10 à 20° , notamment de 12 à 18° par rapport à la direction périphérique (11).

5. Section de matériau plat selon l'une quelconque des revendications précédentes, **caractérisée en ce que** la partie en saillie (12) et l'évidement (14) présentent sur une portion un rayon de courbure compris entre 0,4 et 1,0 mm.

6. Section de matériau plat selon l'une quelconque des revendications précédentes, **caractérisée en ce que** l'évidement (14) présente un col (36) et une tête (34) et **en ce que** le col (36) présente, sur l'un des côtés, un flanc (38) qui s'étend sensiblement dans la direction périphérique (11).

7. Section de matériau plat selon la revendication 6, **caractérisée en ce que** la longueur du flanc (38) du col (36) de l'évidemment (14) dans la direction périphérique (11) est inférieure à la distance entre la première portion de flanc (30) qui s'étend transversalement à la direction périphérique (11) et la deuxième portion de flanc (32).

8. Élément de palier lisse métallique enroulé, notamment un coussinet lisse ou un coussinet lisse à collerette (4) avec joint bord à bord (6), obtenu à partir d'une section de matériau plat (2) en forme de platine selon l'une ou plusieurs des revendications précédentes par une opération de cintrage-roulage, les extrémités (8, 10) de la section de matériau plat (2) enroulée adjacentes entre elles au niveau du joint bord à bord (6) étant mises en prise au moyen d'une partie en saillie (12) située à l'une des extrémités (8) et d'un évidement (14) situé à l'autre extrémité (10), la partie en saillie (12) et l'évidement (14) étant pressés l'un contre l'autre au cours de l'opération de cintrage-roulage et ainsi mis en prise, la partie en saillie (12) étant alors recourbée par rapport à la direction périphérique (11) de l'élément de palier lisse (4), une première portion de flanc (16) étant formée à l'extrémité côté saillie (8) entre les deux parties en saillie (12), laquelle portion de flanc est décalée vers l'avant par rapport à deux deuxièmes portions de flanc extérieures (18) ou décalée vers l'arrière par rapport à deux deuxièmes portions de flanc extérieures (32) et s'étend sensiblement transversalement à la direction périphérique (11) de l'élément de palier lisse (4).

9. Élément de palier lisse métallique enroulé (4) selon la revendication 8, **caractérisé en ce que** la première portion de flanc (16, 30) et les deuxièmes portions de flanc (18, 32) sont décalées l'une par rapport aux autres dans la direction périphérique (11) de 0,5 à 1,0 mm, en particulier de 0,6 à 0,9 mm.

10. Élément de palier lisse métallique enroulé (4) selon l'une quelconque des revendications 8 et 9, **caractérisé en ce que** l'évidement présente un col (36) et une tête (34) et **en ce que** le col (36) présente sur un côté un flanc (38) qui s'étend sensiblement dans la direction périphérique (11).

11. Procédé de fabrication d'un élément de palier lisse métallique enroulé (4) à joint bord à bord (6) selon l'une quelconque des revendications 8, 9 et 10 par une opération de cintrage-roulage, utilisant une section de matériau plat (2) selon l'une ou plusieurs des revendications 1 à 7, les extrémités de la section de matériau plat (2) étant pressées l'une contre l'autre dans la direction périphérique (11) de manière que la partie en saillie (12) vienne en prise avec l'évidemment (14), **caractérisé en ce que**, lorsque l'on presse les extrémités (8, 10) l'une contre l'autre, une force de cintrage et de refoulement est exercée contre la tête épaissie (20) de la partie en saillie (12) et la tête (20) coopère alors en appui du côté non sollicité en traction (24), ce qui provoque le processus de refoulement.
